# EUROPEAN PATENT SPECIFICATION

(11) **EP 1 404 502 B1**
(45) Date of publication and mention of the grant of the patent: **05.11.2008**
(21) Application number: 02748748.7
(22) Date of filing: 07.06.2002
(51) Int. Cl.: B29C 37/00, B65H 15/00

(54) **PROCESS FOR PRODUCING AND STORING AN UNVULCANIZED RUBBER PRODUCT**
VERFAHREN ZUR HERSTELLUNG UND LAGERUNG EINES NICHTVULKANISIERTEN GUMMIPRODUKTS
PROCEDE DE PRODUCTION ET DE STOCKAGE D'UN PRODUIT EN CAOUTCHOUC NON VULCANISE

(30) Priority: 15.06.2001 EP 01113611; 22.06.2001 US 299743 P
(43) Date of publication of application: 07.04.2004
(73) Proprietor: Pirelli Tyre S.p.A., 20126 Milano (IT)
(72) Inventor: VILLANI, Claudio, I-20155 Milano (IT); MIGLIARINI, Luigi, I-20052 Monza (IT); MISANI, Pierangelo, I-20052 Monza (IT)
(74) Representative: Brasca, Marco
(86) International application number: PCT/EP2002/006272
(87) International publication number: WO 2002/102566

(56) References cited:
- EP-A- 0 381 611
- EP-A- 0 575 801
- WO-A-99/62695
- US-A- 5 007 974

## Description

The present invention relates to a process for producing and storing a semi-finished product made of elastomeric material.

More particularly, the present invention relates to a process for preparing and storing a semi-finished product in strip form made of crosslinkable elastomeric material, which is subsequently used in a process for making a rubber article, in particular a tyre.

In the present description and in the claims which follow, the expression "semi-finished product in strip form" means an elongate element which is of indefinite and predominant length compared with the other two dimensions (width and thickness), made of crosslinkable elastomeric material, of constant or variable thickness in the transverse direction of this semi-finished product, used, together with other elements, as a component of a rubber article.

Said semi-finished product may be a tape, that is to say an element consisting solely of elastomeric material, or a band, that is to say an element which comprises filiform reinforcing elements (threads, cords, fibres) at least partially embedded in an elastomeric material.

It is known that tyres can be prepared by a process including a plurality of manufacturing stages. More particularly, said process comprises the stages of preparing, beforehand and separately from each other, a series of semi-finished products corresponding to the various parts of the tyre such as, for example, one or more rubberized carcass plies, one or more belt strips, the tread, the side walls, the airtight layer made of elastomeric material ("liner") which lines the inner surface of tyres intended for use without an inner tube ("tubeless" tyres), the sheet made of elastomeric material placed between the tread and the belt structure, the strips made of elastomeric material, of narrow width and variable transverse thickness, placed under the edges of the belt structure, or the tapes made of elastomeric material, of narrow width and constant thickness, folded around the edges of the belt strips. During the process for producing a tyre, the various semi-finished products made of elastomeric material which are combined to produce the finished tyre are fed, in a specific sequence of operating stages, into a manufacturing machine generally comprising at least one building drum on which the abovementioned semi-finished products are gradually positioned and assembled together, according to techniques that are well known in the art as described, for example, in patents GB 1 495 803 and US 4 484 965.

The abovementioned semi-finished products are usually produced in the form of a continuous strip and, before being used in the course of the industrial production of tyres, are usually wound in the form of superimposed concentric coils around a cylindrical surface such as, for example, the core of a storage reel.

It should be pointed out here that the term "storage reel" is not intended to be limiting but is used, for the purpose of simplifying the description, to indicate any type of device for storing the semi-finished product which may be used as an alternative to said reel, such as, for example, a storage beam.

The winding-up onto storage reels is conventionally carried out using separating means made of antisticking material (for example polyethylene or polyester sheets) which prevent the wound coils from adhering together and then becoming extremely difficult, if not completely impossible, to be detached from each other, especially after a prolonged period of storage. In addition, the detachment of superimposed coils between which strong adhesive forces may have been created would require a strong tension to be exerted, which might change the geometrical dimensions of the semi-finished products, or even cause them to break.

Patent application WO 99/62695 describes a hybrid separating sheet with a different adhesiveness towards the non-vulcanized elastomeric material which needs to be stored on storage reels. As a matter of fact, during storage on a reel, the "stuck-to-liner" phenomenon may be encountered, that is to say that in the storage reel there may be points at which the non-vulcanized elastomeric material adheres too much to the separating sheet, thus causing subsequent problems in the unwinding of this material from the storage reel. To avoid the abovementioned phenomenon, a hybrid separating sheet is thus used, as mentioned above, in which the more expensive material (cotton) with low adhesiveness is used in the region of the storage reel (in particular in the innermost regions close to the core of the reel) where it is most likely that an excessive adhesion between said separating sheet and the elastomeric material will take place, while the less expensive material (polyester) is used in the regions of the storage reel (in particular in the outermost regions of the reel) where there is little probability of excessive adhesion taking place between the separating sheet and the elastomeric material.

Patent US 5 004 635 relates to the use of a separating sheet of differing thickness, which, in addition to preventing adhesion phenomena between the coils of non-vulcanized elastomeric material wound on a storage reel, also prevents any crushing or distortion of said material. Said separating sheet consists of a base, for example polyethylene, a cover, for example polyester, and a compressible filling material placed between the base and the cover, for example polyester fibres.

However, based on the Applicant's experience, the use of separating means as described above has many drawbacks such as, for example: the presence of additional processing stages either during the production of the semi-finished product or during the process for manufacturing the finished product (application and subsequent removal of said separating sheet); the need to work at unwinding speeds that are not too high; the possibility of breakdowns in the machinery due to the presence of said separating sheet; the need for machinery dedicated to its application and subsequent removal. Said drawbacks have a negative impact both on the production costs and on the overall productivity, leading to an increase in the production times for the semi-finished product and the finished product.

The Applicant thus set itself the problem of avoiding the use of said separating means. A first approach was that of including in the elastomeric material a paraffin wax to reduce the adhesiveness of said material. However, in this case, although the adhesiveness decreased and the winding of the semi-finished product on a storage reel was acceptable, problems of unwinding the semi-finished product from the reel were encountered due to lacerations of said product during said unwinding, in particular when the unwinding speed applied was high. In addition, when said semi-finished products were used in a tyre manufacturing process, problems were encountered due to their poor adhesiveness to the underlying elements. Specifically, difficulties were observed during the manufacture of the tyre on account of the slipping of the semi-finished products on the building drum, and even problems of detachment in the finished tyre.

The Applicant then realized that not only was it necessary to reduce the adhesiveness of the crosslinkable elastomeric material of the semi-finished product, but that it was also necessary not to have a negative impact on the properties of said material, and in particular on the "green strength", such that no problems would arise during the winding and subsequent unwinding of the semi-finished product onto/from the storage reel. In addition, it was necessary, particularly when using said semi-finished products in the production of tyres, that no problems of poor adhesiveness, and thus of insufficient adhesion to the underlying elements, were encountered, with consequent problems both in the manufacturing stage (slipping of the semi-finished products on the building drum) and in the finished product (poor adhesion between adjacent elements can cause detachment phenomena, and thus undermine the performance qualities and duration of the tyre).

The Applicant has now found that it is possible to overcome the drawbacks mentioned above and to wind up on storage reels semi-finished products made of crosslinkable elastomeric material, in particular for the production of tyres, without needing to use separating sheets and without having a negative impact on the properties of said material. The Applicant has actually found that the addition of at least one polyalkenamer to the crosslinkable elastomeric material makes it possible to obtain a semi-finished product whose adhesiveness and green strength allow it both to be wound onto a storage reel without using a separating sheet, and to be subsequently unwound from said reel without being lacerated, even when high unwinding speeds are used. In addition, said semi-finished product may be used in the process of manufacturing tyres without creating adhesion problems, in particular problems of insufficient adhesion, either on the building drum or in the finished tyre. Consequently, the addition of said polyalkenamer makes it possible to control both the adhesiveness and the green strength of the elastomeric material and to reduce the manufacturing times both for the semi-finished product and for the finished product.

EP-A-381611 discloses a tyre for vehicle wheels comprising at least one element made of crosslinked elastomeric material including polyoctenamer. US-A-5007974 discloses tyres comprising a reinforcing layer located between the belt structure and the tread.

According to a first aspect, the present invention thus relates to a process for producing and storing a semi-finished product in strip form made of crosslinkable elastomeric material, which includes:
- preparing an elastomeric composition;
- forming said elastomeric composition to obtain a semi-finished product in strip form;
- winding up said semi-finished product in strip form on a storage reel;
characterized in that at least one polyalkenamer is added during the stage of preparing said elastomeric composition.

According to one preferred embodiment, said semi-finished product is a tape consisting of a crosslinkable elastomeric composition comprising at least one polyalkenamer.

According to a further preferred embodiment, said semi-finished product is a band comprising filiform reinforcing elements (threads, cords, fibres) at least partially embedded in a crosslinkable elastomeric composition comprising at least one polyalkenamer. In this case, the product is thus a composite elastomeric material comprising reinforcing cords made of textile, metal or some other material. More particularly, said composite elastomeric material comprises reinforcing cords, typically made of textile (for example rayon, nylon, polyethylene terephthalate), or made of metal (for example steel threads which are stranded together, coated with a metal alloy, for example copper/zinc, zinc/manganese, zinc/molybdenum/cobalt alloys), or made of glass fibre, said cords being mutually parallel and on the same plane, and being coated and welded together with an elastomeric material of the desired thickness. Said reinforcing cords, thus arranged, are analogous to a textile warp, while the presence of the weft is optional since the elastomeric material which coats and welds them together also serves to maintain the arrangement.

According to a further aspect, the present invention relates to a process for producing tyres for vehicle wheels, said process comprising the following stages:
- manufacturing a green tyre comprising at least one element made of crosslinkable elastomeric material, said element being obtained by unwinding a semi-finished product in strip form from a storage reel and then coiling said product onto a building drum;
- moulding the green tyre in a moulding cavity defined in a vulcanizing mould;
- crosslinking the elastomeric material by heating the tyre to a given temperature for a given time;
in which said element made of crosslinkable elastomeric material comprises at least one polyalkenamer.

According to one preferred embodiment, said unwinding is carried out at a speed of between 50 m/min and 400 m/min, preferably between 250 m/min and 350 m/min.

According to a further aspect, the present invention relates to a tyre for vehicle wheels, comprising the following elements:
- at least one rubberized carcass ply shaped in a substantially toroidal configuration, the opposite lateral edges of which are associated with respective right-hand and left-hand bead wires, each bead wire being enclosed in a respective bead;
- a belt structure comprising at least one belt strip applied along the circumference of said rubberized carcass ply;
- a tread applied along the circumference of said belt structure;
- a reinforcing layer placed between said belt structure and said tread;
- right-hand and left-hand side walls applied externally to said carcass ply, said side walls extending, in an axially external position, from the respective bead to the respective edge of the belt structure;
in which said reinforcing layer placed between said belt structure and said tread comprises a plurality of reinforcing cords coated and welded together with a crosslinked elastomeric composition comprising at least one polyalkenamer. Preferably, said reinforcing cords consist of textile fibres.

According to one preferred embodiment, the polyalkenamer is a polyoctenamer.

According to a further preferred embodiment, said polyoctenamer has the following characteristics:
- percentage of double bonds, determined by infrared (IR) spectrometry, in trans configuration of at least 60 mol%, preferably between 75 mol% and 95 mol%;
- Mooney viscosity ML (1+4) at 125°C, measured according to ASTM standard D1646, of between 2 and 20, preferably between 5 and 15;
- melting point, measured by DSC (differential scanning calorimetry) of between 25°C and 80°C, preferably between 40°C and 60°C;
- glass transition temperature (Tg), measured according to ISO standard 53 445, of between -90°C and -50°C, preferably between -80°C and -60°C;
- percentage of macrocycles with a molecular weight of up to 100 000, which may be determined by gel permeation chromatography (GPC), of at least 25% by weight.

The polyalkenamers which may be used in the present invention are products that are known per se and may be obtained by a metathesis reaction, generally in solution, of a cycloalkene chosen, for example, from cyclopentene, cyclooctene and cyclododecene, or mixtures thereof, in the presence of a mixture of catalysts based on compounds of metals belonging to the sub-groups 5-7 and of metals belonging to the main groups 1-4 of the Periodic Table of the Elements (for example tungsten hexachloride/ethylaluminium dichloride catalytic system). It should be pointed out that the references to the Periodic Table of the Elements refer to the version of the table published in "Handbook of Chemistry and Physics" published by the CRC, 1987, and that the IUPAC system has been used as regards the definition of the groups and sub-groups.

Further details regarding the preparation of the abovementioned polyalkenamers are described, for example, by Scott, Calderon, Ofstead, Judy and Ward in "Rubber Chem. and Tech.", 44, (1971) and in the references cited therein, and in patents US 3 816 358 and US 4 153 772.

Examples of polyalkenamers which may be used in the present invention and which are currently commercially available are the Vestenamer® products from Degussa-Hüls. The product Vestenamer® 8012 is particularly preferred.

According to one preferred embodiment, the polyalkenamer is present in an amount of between 3 phr and 40 phr, preferably between 5 phr and 30 phr, even more preferably between 8 phr and 25 phr.

For the purpose of the present description and the claims, the expression "phr" is intended to indicate the parts by weight of a given component of the elastomeric composition per 100 parts by weight of polymer base, which includes at least one elastomeric polymer as defined below and at least one polyalkenamer as defined above.

The elastomeric composition which may be used according to the present invention also comprises at least one elastomeric polymer chosen from natural or synthetic rubbers with elastomeric properties, chosen from: natural rubber; homopolymers and copolymers of butadiene, of isoprene or of 2-chlorobutadiene, such as, for example, polybutadiene (BR), polyisoprene (IR), styrene-butadiene (SBR), nitrile-butadiene (NBR), polychloroprene (CR); ethylene/propylene copolymers (EPM); ethylene/propylene/non-conjugated diene (such as, for example, norbornene, cyclooctadiene or dicyclopentadiene) terpolymers (EPDM); or mixtures thereof. The following are preferred: natural rubber, styrene/butadiene (SBR), nitrile-butadiene (NBR), polychloroprene (CR), ethylene/propylene copolymers (EPM), ethylene/propylene/non-conjugated diene (such as, for example, norbornene, cyclooctadiene or dicyclopentadiene) terpolymers (EPDM), or mixtures thereof.

Said elastomeric composition may also comprise a sulphur-based vulcanizing system chosen from those commonly used for diene elastomers, generally comprising a sulphur-based vulcanizing agent together with one or more vulcanization activators and/or accelerators.

The vulcanizing agent most advantageously used is sulphur, or molecules containing sulphur (sulphur donors), with accelerators and activators that are known to those skilled in the art.

Activators that are particularly effective are zinc compounds and in particular ZnO, ZnCO₃ and zinc salts of saturated or unsaturated fatty acids containing from 8 to 18 carbon atoms, such as, for example, zinc stearate, which are preferably formed in situ in the blend from ZnO and fatty acid. Other activators may be chosen from: BiO, PbO, Pb₃O₄, PbO₂ and mixtures thereof.

Accelerators commonly used may be chosen from: dithiocarbamates, guanidine, thiourea, thiazoles, sulphenamides, thiurams, amines, xanthates and the like, or mixtures thereof.

In addition, said elastomeric composition may comprise at least one reinforcing filler (for example carbon black, silica, alumina, aluminosilicates, calcium carbonate, kaolin and the like, or mixtures thereof), in addition to other conventional components such as antioxidants, anti-ageing agents, protective agents, plasticizers, compatibilizers for the reinforcing filler, adhesives, anti-ozone agents, modifying resins, lubricants (for example mineral oils, vegetable oils, synthetic oils and the like, or mixtures thereof).

The crosslinkable elastomeric composition which may be used according to the present invention may be prepared according to the processes known in the art. For example, said preparation may be carried out by mixing together the various ingredients which are chosen as a function of the particular semi-finished product which it is desired to obtain. The mixing can be carried out, for example, using an open blender of open-mill type or an internal blender of the type with tangential rotors (Banbury) or interlocking rotors (Intermix), or in continuous blenders of the Ko-Kneader (Buss) type or co-rotating or counter-rotating twin-screw type. The operating conditions under which the process is performed also depend on the type of ingredients which need to be mixed together and are known to those skilled in the art.

Once the crosslinkable elastomeric composition has been prepared, said composition is formed so as to obtain a semi-finished product in strip form, for example in the form of a tape or band. The forming of the elastomeric material may be carried out by straining, profiling, calendering or extrusion. The operating conditions under which the process is performed depend on the particular semi-finished product which it is desired to obtain and are known to those skilled in the art. In the case of forming a band, as mentioned above, it is necessary to bring about coupling between the elastomeric material and the reinforcing elements (threads, cords or fibres): in this case also, the techniques used and the operating conditions under which the process is performed depend on the particular semi-finished product which it is desired to obtain and are known to those skilled in the art.

The semi-finished product in strip form made of crosslinkable elastomeric material which is thus obtained is then subjected to a stage of cooling which may be carried out in various ways such as, for example: immersing said semi-finished product in a cooling liquid, for example water at room temperature; or passing said semi-finished product over a series of coiled tubes in which cold water circulates.

Once cooled, the semi-finished product in strip form made of elastomeric material is wound on a storage reel.

At the time of use, the abovementioned semi-finished product wound on the storage reel can be unwound and used without any problems arising, and, when used for manufacturing tyres, it can adhere to the underlying elements both during manufacture and in the finished tyre.

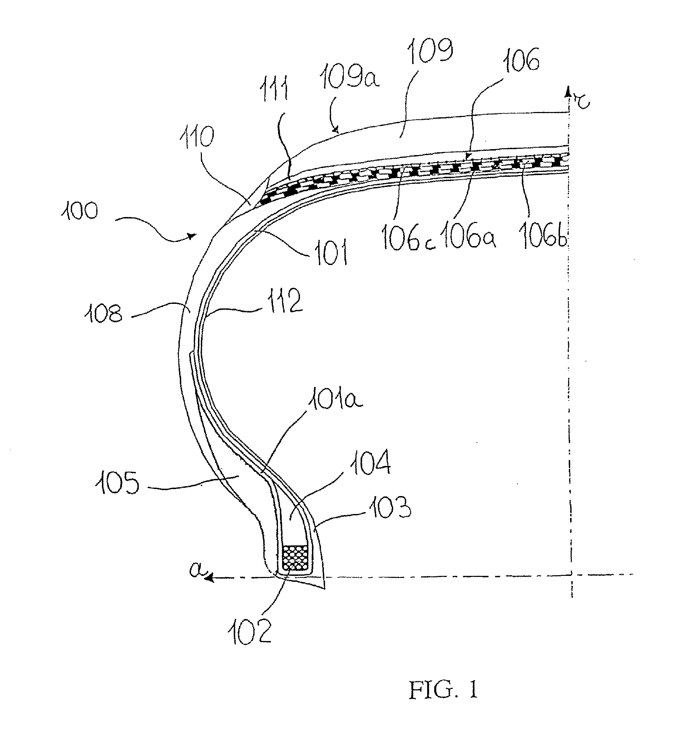

The present invention will now be illustrated in further detail by means of a number of illustrative embodiments, with reference to the attached Fig. 1, which is a view in cross section of a portion of a tyre made according to the invention.

"a" indicates an axial direction and "r" indicates a radial direction. For simplicity, Fig. 1 shows only a portion of the tyre, the remaining portion not represented being identical and symmetrically arranged with respect to the radial direction "r".

The tyre (100) comprises at least one rubberized carcass ply (101), the opposite lateral edges of which are associated with respective bead wires (102). The association between the carcass ply (101) and the bead wires (102) is usually achieved by folding back the opposite lateral edges of the carcass ply (101) around the bead wires (102) so as to form the so-called carcass back-folds (101a) as shown in Fig. 1.

Alternatively, the conventional bead wires (102) can be replaced with a pair of circumferentially inextensible annular inserts formed from elongate elements arranged in concentric coils (not represented in Fig. 1) (see, for example, European patent applications EP 928 680 and EP 928 702). In this case, the carcass ply (101) is not back-folded around said annular inserts, the coupling being provided by a second carcass ply (not represented in Fig. 1) applied externally over the first.

The rubberized carcass ply (101) generally consists of a plurality of reinforcing cords arranged parallel to each other and at least partially coated with a layer of elastomeric material. These reinforcing cords are usually made of textiles (for example rayon, nylon or polyethylene terephthalate). In some cases, said reinforcing cords are cords made of metal (for example steel threads stranded together), coated with a metal alloy (for example copper/zinc, zinc/manganese, zinc/molybdenum/cobalt alloys and the like).

The rubberized carcass ply (101) is usually of radial type, i.e. it incorporates reinforcing cords arranged in a substantially perpendicular direction relative to a circumferential direction. Each bead wire (102) is encased in a bead (103), defined along an inner circumferential edge of the tyre (100), with which the tyre engages on a rim (not represented in Fig. 1) forming part of a vehicle wheel. The space defined by each carcass back-fold (101a) contains a bead filler (104) in which the bead wires (102) are embedded. An antiabrasive strip (105) is usually placed in an axially external position relative to the carcass back-fold (101a).

A belt structure (106) is applied along the circumference of the rubberized carcass ply (101). In the specific embodiment in Fig. 1, the belt structure (106) comprises two belt strips (106a, 106b) which incorporate a plurality of reinforcing cords, typically metal cords, parallel to each other in each strip and intersecting with respect to the adjacent strip, oriented so as to form a predetermined angle relative to a circumferential direction. The belt structure (106) can optionally comprise at least one reinforcing layer (106c) at zero degrees, commonly known as a "0° band", which can be produced according to the invention, placed on the radially outermost belt strip (106b), which generally incorporates a plurality of reinforcing cords, typically textile cords, arranged at an angle of a few degrees relative to a circumferential direction, and coated and welded together by means of an elastomeric material.

A side wall (108) is also applied externally onto the rubberized carcass ply (101), this side wall extending, in an axially external position, from the bead (103) to the edge of the belt structure (106).

A tread (109), whose lateral edges meet the side walls (108), is applied circumferentially in a position radially external to the belt structure (106). Externally, the tread (109) has a rolling surface (109a) designed to come into contact with the ground. Circumferential grooves linked by transverse notches (not represented in Fig. 1) so as to define a plurality of blocks of various shapes and sizes distributed over the rolling surface (109a) are generally made in this surface (109a), which is represented for simplicity in Fig. 1 as being smooth.

A strip made of elastomeric material (110) commonly known as a "mini-side wall", may optionally be present in the zone of the join between the side walls (108) and the tread (109), this mini-side wall generally being obtained by co-extrusion with the tread and allowing an improvement in the mechanical interaction between the tread (109) and the side walls (108). Alternatively, the end portion of the side wall (108) directly covers the lateral edge of the tread (109). A underlayer which forms, with the tread (109), a structure commonly known as a "cap and base" (not represented in Fig. 1) may optionally be placed between the belt structure (106) and the tread (109).

A layer of elastomeric material (111) which serves as an "attachment sheet", i.e. a sheet capable of providing the connection between the tread (109) and the belt structure (106), may be placed between the tread (109) and the belt structure (106).

In the case of tubeless tyres, a rubber layer (112) generally known as a "liner", which provides the necessary impermeability to the inflation air of the tyre, may also be provided in a radially internal position relative to the rubberized carcass ply (101).

The process for producing the tyre according to the present invention can be carried out according to techniques and using apparatus that are known in the art, as described, for example, in patents EP 199 064, US 4 872 822 and US 4 768 937, said process including at least one stage of manufacturing the green tyre and at least one stage of vulcanizing this tyre.

More particularly, the process for producing the tyre comprises the stages of preparing, beforehand and separately from each other, a series of semi-finished products corresponding to the various parts of the tyre which are then combined together using a suitable manufacturing machine, as defined above. The green tyre thus obtained is then passed to the subsequent stages of moulding and vulcanization. To this end, a vulcanization mould is used which is designed to receive the tyre being processed inside a moulding cavity having countermoulded walls which define the outer surface of the tyre when the crosslinking is complete.

Alternative processes for producing a tyre or parts of a tyre without using semi-finished products are disclosed, for example, in the abovementioned patent applications EP 928 680 and EP 928 702.

The green tyre can be moulded by introducing a pressurized fluid into the space defined by the inner surface of the tyre, so as to press the outer surface of the green tyre against the walls of the moulding cavity. In one of the moulding methods widely practised, a vulcanization chamber made of elastomeric material, filled with steam and/or another fluid under pressure, is inflated inside the tyre closed inside the moulding cavity. In this way, the green tyre is pushed against the inner walls of the moulding cavity, thus obtaining the desired moulding. Alternatively, the moulding can be carried out without an expandable vulcanization chamber, by providing inside the tyre a toroidal metal support shaped according to the configuration of the inner surface of the tyre to be obtained (as decribed, for example, in patent EP 242,840). The difference in coefficient of thermal expansion between the toroidal metal support and the crude elastomeric material is exploited to achieve an adequate moulding pressure.

At this point, the stage of vulcanizing the crude elastomeric material present in the tyre is carried out. To this end, the outer wall of the vulcanization mould is placed in contact with a heating fluid (generally steam) such that the outer wall reaches a maximum temperature generally of between 100°C and 230°C. Simultaneously, the inner surface of the tyre is heated to the vulcanization temperature using the same pressurized fluid used to press the tyre against the walls of the moulding cavity, heated to a maximum temperature of between 100°C and 250°C. The time required to obtain a satisfactory degree of vulcanization throughout the mass of the elastomeric material can vary in general between 3 min and 90 min and depends mainly on the dimensions of the tyre.' When the vulcanization is complete, the tyre is removed from the vulcanization mould.

The present invention will be further illustrated below by means of a number of preparation examples, which are given for purely indicative purposes and without any limitation of this invention.

### EXAMPLES 1-4

The compositions given in Table 1 were prepared as follows (the amounts are given in phr).

All the components given in Table 1, except for the sulphur, CTP, HMMM and TBBS, were mixed together in an internal blender of the laboratory type with tangential rotors (Banbury) model PL 1.6 from Pomini, rotated at about 75 rpm. After about 3 minutes and, in any case, as soon as the temperature reached 150°C, said composition was discharged from the blender (1st stage).

After cooling to room temperature (about 23°C), said composition was placed in a laboratory open-mill blender and the remaining components, i.e. ZnO, sulphur, CTP, HMMM and TBBS, were added (2nd stage). The composition was discharged from said blender when the temperature reached 90°C.

**TABLE 1**

| INGREDIENTS | Ex. 1(*) | Ex. 2(*) | Ex. 3 | Ex. 4 |
|---|---|---|---|---|
| 1st stage | | | | |
| NR | 100.00 | 100.00 | 85.00 | 75.00 |
| Vestenamer® 8012 | - | - | 15.00 | 25.00 |
| N326 | 54.00 | 54.00 | 54.00 | 54.00 |
| Stearic acid | 1.50 | 1.50 | 1.50 | 1.50 |
| Rhenogran Resorcinol® 80 | 1.58 | 1.58 | | 1.58 |
| 6-PPD | 1.00 | 1.00 | 1.00 | 1.00 |
| Paraffin wax | - | 4.00 | - | - |
| Zinc oxide | 5.00 | 5.00 | 5.00 | 5.00 |
| 2nd stage | | | | |
| 33% insoluble sulphur | 4.05 | 4.05 | 4.05 | 4.05 |
| CTP | 0.20 | 0.20 | 0.20 | 0.20 |
| HMMM | 2.92 | 2.92 | 2.92 | 2.92 |
| TBBS | 1.00 | 1.00 | 1.00 | 1.00 |

| | | | | |
|---|---|---|---|---|
| (*): comparative. NR: natural rubber; Vestenamer® 8012: polyoctenamer from Degussa-Hüls; N326: carbon black; Rhenogran Resorcinol® 80: 80% resorcinol supported with a polymeric excipient, from Rhein-Chemie (adhesion promoting agent); 6-PPD: para-phenylenediamine, Santoflex® 13 from Monsanto (protective agent); 33% insoluble sulphur: Crystex® OT33 from Flexsys; CTP: cyclohexylthiophthalimide, Vulkalent® G from Bayer (retardant); HMMM: hexamethoxymethylenemelamine, Cyrez® 963 from Cytec (methylene donor); TBBS: N-t-butyl-2-benzothiazilsulphenamide, Vulkacit® NZ from Bayer (accelerator). | | | | |

The following tests were carried out on the compositions thus prepared.

### Tests on green product

The following were measured in the non-crosslinked compositions obtained as described above:
- "scorch time" at 127°C according to ISO standard 289/1;
- Mooney viscosity ML (1+4) at 100°C according to ISO standard 289/1;
- density at 23°C according to ISO standard 2781.

The data obtained are given in Table 2.

### Tests on vulcanized product

### (a) Rheometric properties

The compositions obtained as described above were subsequently subjected to MDR rheometric analysis (according to ISO standard 6502) using an MDR rheometer from Monsanto, the tests being carried out at 170°C for 30 minutes, with an oscillation frequency of 1.66 Hz (100 oscillations per minute) and an oscillation amplitude of ±0.5°, measuring the time required to achieve an increase of 2 rheometric units (TS2) and the time required to reach 90% of the final torque value (T90). The data obtained are given in Table 2.

### (b) Mechanical properties, elastic yield and hardness

The following were measured on samples of the compositions obtained as described above, crosslinked at 170°C for 10 minutes:
- the tensile mechanical properties according to ISO standard 37 (CA1 = stress at break at 100% elongation; CR= stress at break);
- the hardness in IRHD degrees according to ISO standard 48;
- the elastic yield (E.Y.) according to ISO standard 4662.

The data obtained are given in Table 2.

**TABLE 2**

| PROPERTIES | Ex. 1 (*) | Ex. 2 (*) | Ex. 3 | Ex. 4 |
|---|---|---|---|---|
| Scorch time MS at 127°C (min.) | 18.68 | 18.48 | 19.07 | 18.92 |
| Mooney ML (1+4) at 100°C | 65.90 | 60.20 | 56.40 | 46.90 |
| Density (g/cm³) | 1.147 | 1.138 | 1.140 | 1.143 |
| CA1 (MPa) | 3.55 | 3.20 | 3.76 | 4.24 |
| CR (MPa) | 19.46 | 18.98 | 13.27 | 12.84 |
| IRHD (23°C) | 83.40 | 79.00 | 83.60 | 84.10 |
| IRHD (100°C) | 76.50 | 73.80 | 77.00 | 78.10 |
| E.Y. (%) | 50.00 | 51.60 | 52.00 | 52.00 |
| T90 (min.) | 3.21 | 3.21 | 3.57 | 3.87 |
| TS2 (min.) | 0.77 | 0.81 | 0.79 | 0.78 |

| | | | | |
|---|---|---|---|---|
| (*) = comparative | | | | |

### Adhesion tests

The compositions of Examples 1-4 were extruded using a laboratory single-screw extruder described in ASTM standard D2230-96e1, equipped with a die with a rectangular outlet cross section having the following dimensions: 4 mm × 35 mm, working under the following conditions:
- rotation speed of the screw: 90 rpm;
- temperature profile constant at 90°C.

Strips were obtained which were allowed to cool to room temperature (about 23°C) for 4 hours. Next, from said strips rectangular test pieces were obtained which had the following dimensions: 40 mm × 35 mm, which were subjected to the adhesion test using a Chatillon Model DPP-100N force meter in traction and compression.

To this end, two test pieces were used for each composition to be tested. The test pieces were applied between the clamps of said forcemeter, taking care, before closing the two clamps together, to place a separating sheet made of perforated polyethylene (diameter of the hole: 11 mm) between the two test pieces, so as to ensure a constant cross section of contact between them. The surfaces of the two test pieces were placed in contact by applying a load equal to 40 N, in compression, for 10 seconds. At the end of the 10 seconds, the load was removed and the minimum force required to detach the two surfaces was measured in Newtons (N) using a force meter. The data obtained are given in Table 3.

### Green strength tests

The green strength tests were carried out according to ISO standard 9026. The following values were measured:
- M50: load at 50% elongation;
- M100: load at 100% elongation;
- CR: stress at break.

The data obtained are given in Table 3.

**TABLE 3**

| | Ex. 1 (*) | Ex. 2 (*) | I Ex. 3 | Ex. 4 |
|---|---|---|---|---|
| | ADHESION (N) | | | |
| | 31.3 | 20.5 | 26.6 | 17.8 |
| | GREEN STRENGTH | | | |
| M50 (MPa) | 0.26 | 0.32 | 0.62 | 0.96 |
| M100 (MPa) | 0.28 | 0.34 | 0.77 | 1.13 |
| CR (MPa) | 0.61 | 1.05 | 1.61 | 3.30 |

| | | | | |
|---|---|---|---|---|
| (*) = comparative. | | | | |

### EXAMPLE 5

### Preparation of a band

The compositions of Examples 1-4 were drawn at 125°C using a strainer from the company Ital equipped with a screw of diameter 90 mm and a head for rubberizing textiles. Metal wires oriented at an angle of 90° relative to the strainer were inserted in the head of the strainer and were rubberized, thus obtaining a band. The bands thus obtained were then cooled in a cooling unit composed of 5 drums, cut and collected on reels with an inside diameter of 500 mm and a capacity of 7000-8000 m, at a speed of 110 m/min.

The reels were stored for 60 hours and then unwound at a speed of 300 m/min.: the results obtained are given in Table 4. Table 4 shows the percentage of material unwound without becoming lacerated.

**TABLE 4**

| EXAMPLE | % MATERIAL UNWOUND FROM THE REEL |
|---|---|
| 1 (*) | 2 |
| 2 (*) | 25 |
| 3 | 98 |
| 4 | 98 |

| | |
|---|---|
| (*) = comparative | |

### EXAMPLE 6

The bands obtained with the compositions of Examples 3 and 4 were used to produce some tyres of the P6000 255/60ZR16 type. Said bands allowed the tyres to be prepared without giving rise to any drawbacks.

## Claims

1. Process for producing and storing a semi-finished product in strip form made of crosslinkable elastomeric material, which includes:
- preparing an elastomeric composition;
- forming said elastomeric composition to obtain a semi-finished product in strip form;
- winding up said semi-finished product in strip form on a storage reel;
**characterized in that** at least one polyalkenamer is added during the stage of preparing said elastomeric composition.

2. Process according to Claim 1, in which the semi-finished product is a tape consisting of a crosslinkable elastomeric composition comprising at least one polyalkenamer.

3. Process according to Claim 1, in which the semi-finished product is a band comprising filiform reinforcing elements at least partially embedded in a crosslinkable elastomeric composition comprising at least one polyalkenamer.

4. Process according to any one of the preceding claims, in which the polyalkenamer is a polyoctenamer.

5. Process according to Claim 4, in which the polyoctenamer has a percentage of double bonds in trans configuration of at least 60 mol%.

6. Process according to Claim 4, in which the polyoctenamer has a Mooney viscosity ML (1+4) at 125°C of between 2 and 20.

7. Process according to Claim 4, in which the polyoctenamer has a melting point of between 25°C and 80°C.

8. Process according to Claim 4, in which the polyoctenamer has a glass transition temperature (Tg) of between -90°C and -50°C.

9. Process according to Claim 4, in which the polyoctenamer has a percentage of macrocycles with a molecular weight up to 100 000 of at least 25% by weight.

10. Process according to any one of the preceding claims, in which the polyalkenamer is present in an amount of between 3 phr and 40 phr.

11. Process according to Claim 10, in which the polyalkenamer is present in an amount of between 5 phr and 30 phr.

12. Process according to Claim 11, in which the polyalkenamer is present in an amount of between 8 phr and 25 phr.

13. Process according to any one of the preceding claims, in which the elastomeric composition comprises at least one elastomeric polymer chosen from: natural rubber; homopolymers and copolymers of butadiene, of isoprene or of 2-chlorobutadiene, such as polybutadiene (BR), polyisoprene (IR), styrene-butadiene (SBR), nitrile-butadiene (NBR), polychloroprene (CR); ethylene/propylene copolymers (EPM); ethylene/propylene/nonconjugated diene terpolymers (EPDM); or mixtures thereof.

14. Process according to Claim 13, in which the elastomeric polymer is chosen from: natural rubber, styrene-butadiene (SBR), nitrile-butadiene (NBR), polychloroprene (CR), ethylene/propylene copolymers (EPM), ethylene/propylene/nonconjugated diene terpolymers (EPDM), or mixtures thereof.

15. Process for producing tyres for vehicle wheels, said process comprising the following stages:
- manufacturing a green tyre comprising at least one element made of crosslinkable elastomeric material, said element being obtained by unwinding a semi-finished product in strip form from a storage reel and then coiling said product onto a building drum;
- moulding the green tyre in a moulding cavity defined in a vulcanizing mould;
- crosslinking the elastomeric material by heating the tyre to a given temperature for a given time;
in which said element made of crosslinkable elastomeric material comprises at least one polyalkenamer.

16. Process according to Claim 15, in which the unwinding is carried out at a speed of between 50 m/min and 400 m/min.

17. Process according to Claim 16, in which the unwinding is carried out at a speed of between 250 m/min and 350 m/min.

18. Process according to any one of Claims 15 to 17, in which the polyalkenamer is defined in any one of Claims 4 to 12.

19. Process according to any one of Claims 15 to 18, in which the elastomeric composition is defined in Claim 13 or 14.

20. Tyre for vehicle wheels, comprising the following elements:
- at least one rubberized carcass ply shaped in a substantially toroidal configuration, the opposite lateral edges of which are associates with respective right-hand and left-hand bead wires, each bead wire being enclosed in a respective bead;
- a belt structure comprising at least one belt strip applied along the circumference of said rubberized carcass ply;
- a tread applied along the circumference of said belt structure;
- a reinforcing layer placed between said belt structure and said tread;
- right-hand and left-hand side walls applied externally to said carcass ply, said side walls extending, in an axially external position, from the respective bead to the respective edge of the belt structure;
**characterized in that** said reinforcing layer placed between said belt structure and said tread comprises a plurality of reinforcing cords coated and welded together with a crosslinked elastomeric composition comprising at least one polyalkenamer.

21. Tyre for vehicle wheels according to Claim 20, in which the reinforcing cords consist of textile fibres.

22. Tyre for vehicle wheels according to Claim 20 or 21, in which the polyalkenamer is defined in any one of Claims 4 to 12.

23. Tyre for vehicle wheels according to any one of Claims 20 to 22, in which the elastomeric composition is defined in Claim 13 or 14.

## Patentansprüche

1. Verfahren zur Herstellung und Lagerung eines aus einem vernetzbaren Elastomermaterial hergestellten Halbfertigproduktes in Streifenform, das
- die Herstellung eines Elastomergemisches,
- die Bildung des Elastomergemisches zur Erzielung eines Halbfertigproduktes in Streifenform und das
- Aufwickeln des Halbfertigproduktes in Streifenform auf eine Lagerungsrolle umfaßt,
**dadurch gekennzeichnet, daß** während der Stufe der Herstellung des Elastomergemisches wenigstens ein Polyalkenamer zugesetzt wird.

2. Verfahren nach Anspruch 1, bei dem das Halbfertigprodukt ein Band darstellt, bestehend aus einem vernetzbaren Elastomergemisch, das wenigstens ein Polyalkenamer umfaßt.

3. Verfahren nach Anspruch 1, bei dem das Halbfertigprodukt ein Band ist, daß faserförmige Verstärkungselemente umfaßt, die wenigstens teilweise in ein vernetzbares Elastomergemisch, das wenigstens ein Polyalkenamer umfaßt, eingebettet sind.

4. Verfahren nach einem der vorhergehenden Ansprüche, bei dem das Polyalkenamer ein Polyoctenamer ist.

5. Verfahren nach Anspruch 4, bei dem das Polyoctenamer einen Prozentanteil an Doppelbindungen in trans-Konfiguration von wenigstens 60 Mol-% aufweist.

6. Verfahren nach Anspruch 4, bei dem das Polyoctenamer eine Mooney-Viskosität ML (1+4) bei 125° C von 2 bis 20 aufweist.

7. Verfahren nach Anspruch 4, bei dem das Polyoctenamer einen Schmelzpunkt zwischen 25° C und 80° C aufweist.

8. Verfahren nach Anspruch 4, bei dem das Polyoctenamer eine Glasumwandlungstemperatur (Tg) von -90° C bis -50° C aufweist.

9. Verfahren nach Anspruch 4, bei dem das Polyoctenamer einen Prozentanteil an Makrozyklen mit einem Molekulargewicht von bis zu 100000 von wenigstens 25 Gew.-% aufweist.

10. Verfahren nach einem der vorhergehenden Ansprüche, bei dem das Polyalkenamer in einer Menge von 3 bis 40 phr vorliegt.

11. Verfahren nach Anspruch 10, bei dem das Polyalkenamer in einer Menge von 5 bis 30 phr vorliegt.

12. Verfahren nach Anspruch 11, bei dem das Polyalkenamer in einer Menge von 8 bis 25 phr vorliegt.

13. Verfahren nach einem der vorhergehenden Ansprüche, bei dem das Elastomergemisch wenigstens ein Elastomerpolymer umfaßt, ausgewählt aus Naturkautschuk, Homo- und Copolymeren von Butadien, Isopren oder 2-Chlorbutadien wie Polybutadien (BR), Polyisopren (IR), Styrol-Butadien (SBR), Nitril-Butadien (NBR), Polychloropren (CR), Ethylen/Propylen-Copolymeren (EPM), Ethylen/Propylen/nichtkonjugierten Dienterpolymeren (EPDM) oder Gemischen davon.

14. Verfahren nach Anspruch 13, bei dem das Elastomerpolymer ausgewählt wird aus Naturkautschuk, Styrol-Butadien (SBR), Nitril-Butadien (NBR), Polychloropren (CR), Ethylen/Propylen-Copolymeren (EPM), Ethylen/Propylen/nichtkonjugierten Dienterpolymeren (EPDM) oder Gemischen davon.

15. Verfahren zur Herstellung von Reifen für Kraftfahrzeugräder, wobei dieses die folgenden Stufen umfaßt:
- Herstellung eines Reifenrohlings, der wenigstens ein Element umfaßt, hergestellt aus vernetzbarem Elastomermaterial, wobei dieses Element erhalten wird durch Abwickeln eines Halbfertigproduktes in Streifenform von einer Lagerungsrolle unter nachfolgendem Aufwickeln des Produktes auf eine Bautrommel,
- Formung des Reifenrohlings in einem von einer Vulkanisierform begrenzten Formhohlraum und
- Vernetzung des Elastomermaterials durch Erwärmung des Reifens auf eine gegebene Temperatur während einer gegebenen Zeitdauer,
wobei das hergestellte Element aus dem vernetzbaren Elastomermaterial wenigstens ein Polyalkenamer umfaßt.

16. Verfahren nach Anspruch 15, bei dem die Abwicklung bei einer Geschwindigkeit zwischen 50 m/min und 400 m/min durchgeführt wird.

17. Verfahren nach Anspruch 16, bei dem die Abwicklung bei einer Geschwindigkeit zwischen 250 m/min und 350 m/min durchgeführt wird.

18. Verfahren nach einem der Ansprüche 15 bis 17, bei dem das Polyalkenamer wie in einem der Ansprüche 4 bis 12 definiert ist.

19. Verfahren nach einem der Ansprüche 15 bis 18, bei dem das Elastomergemisch wie in einem der Ansprüche 13 oder 14 definiert ist.

20. Reifen für Kraftfahrzeugräder, der die folgenden Elemente umfaßt:
- wenigstens eine gummierte Karkassenzwischenlage, welche eine im Wesentlichen ringförmige Konfiguration aufweist, deren gegenüberliegende Seitenkanten mit den entsprechenden rechtsseitigen und linksseitigen Wulstdrähten verbunden sind, wobei jeder Wulstdraht in einer entsprechenden Wulst eingeschlossen ist,
- eine Gürtelstruktur, die wenigstens einen am Umfang der gummierten Karkassenzwischenlage aufgebrachten Gürtelstreifen umfaßt,
- eine am Umfang der Gürtelstruktur aufgebrachte Lauffläche,
- eine zwischen der Gürtelstruktur und der Lauffläche angeordnete Verstärkungsschicht und
- außen auf der Karkassenzwischenlage aufgebrachte rechtsseitige und linksseitige Seitenwände, die sich in axial äußerer Position vom entsprechenden Wulst zur entsprechenden Kante der Gürtelstruktur hin erstrecken,
**dadurch gekennzeichnet, daß** die zwischen der Gürtelstruktur und der Lauffläche angeordnete Verstärkungsschicht eine Vielzahl von mit einem, wenigstens ein Polyalkenamer umfassenden vernetzten Elastomergemisch beschichteten und miteinander verschweißten Verstärkungskords umfaßt.

21. Reifen für Kraftfahrzeugräder nach Anspruch 20, bei dem die Verstärkungskords aus Textilfasern bestehen.

22. Reifen für Kraftfahrzeugräder nach Anspruch 20 oder 21, bei dem das Polyalkenamer wie in einem der Ansprüche 4 bis 12 definiert ist.

23. Reifen für Kraftfahrzeugräder nach einem der Ansprüche 20 bis 22, bei dem das Elastomergemisch wie in einem der Ansprüche 13 oder 14 definiert ist.

## Revendications

1. Procédé pour produire et stocker un produit fini sous forme de bande de matière élastomère réticulable, le procédé comprenant les étapes consistant à :
- élaborer un mélange élastomère ;
- mettre en forme ledit mélange élastomère afin d'obtenir un produit semi-fini en forme de bande ;
- enrouler ledit produit semi-fini en forme de bande sur une bobine de stockage ;
**caractérisé en ce qu'**au moins un polyalcénamère est ajouté pendant l'étape d'élaboration dudit mélange élastomère.

2. Procédé selon la revendication 1, dans lequel le produit semi-fini est un ruban constitué d'un mélange élastomère réticulable contenant au moins un polyalcénamère.

3. Procédé selon la revendication 1, dans lequel le produit semi-fini est une bande comportant des éléments de renforcement filiformes noyés au moins partiellement dans un mélange élastomère polymérisable contenant au moins un polyalcénamère.

4. Procédé selon l'une quelconque des revendications précédentes, dans lequel le polyalcénamère est un polyocténamère.

5. Procédé selon la revendication 4, dans lequel le polyocténamère a un pourcentage molaire de doubles liaisons en configuration trans d'au moins 60.

6. Procédé selon la revendication 4, dans lequel le polyocténamère a, à 125°C, une viscosité Mooney ML (1+4) de 2 à 20.

7. Procédé selon la revendication 4, dans lequel le polyocténamère a un point de fusion compris entre 25°C et 80°C.

8. Procédé selon la revendication 4, dans lequel le polyocténamère a une température de transition vitreuse (Tg) comprise entre -90°C et -50°C.

9. Procédé selon la revendication 4, dans lequel le polyocténamère a un pourcentage d'au moins 25% en poids de macrocycles à poids moléculaire atteignant 100 000.

10. Procédé selon l'une quelconque des revendications précédentes, dans lequel le polyalcènamère est présent en quantité comprise entre 3 phr et 40 phr.

11. Procédé selon la revendication 10, dans lequel le polyalcènamère est présent en quantité comprise entre 5 phr et 30 phr.

12. Procédé selon la revendication 11, dans lequel le polyalcénamère est présent en quantité comprise entre 8 phr et 25 phr.

13. Procédé selon l'une quelconque des revendications précédentes, dans lequel le mélange élastomère contient au moins un polymère élastomère choisi parmi : le caoutchouc naturel ; les homopolymères et copolymères de butadiène, d'isoprène ou de 2-chlorobutadiène, tel que le polybutadiène (BR), le polyisoprène (IR), le styrène-butadiène (SBR), le nitrile-butadiène (NBR), le polychloroprène (CR) ; les copolymères d'éthylène-propylène (EPM) ; les terpolymères d'éthylène-propylène-diène non conjugué ; ou des mélanges de ceux-ci.

14. Procédé selon la revendication 13, dans lequel le polymère élastomère est choisi parmi : le caoutchouc naturel ; le styrène-butadiène (SBR), le nitrile-butadiène (NBR), le polychloroprène (CR) ; les copolymères d'éthylène-propylène (EPM) ; les terpolymères d'éthylène-propylène-diène non conjugué ; ou des mélanges de ceux-ci.

15. Procédé pour fabriquer des pneumatiques pour roues de véhicules, ledit procédé comprenant les étapes suivantes, consistant à :
- fabriquer un pneumatique cru contenant au moins un élément constitué par une matière élastomère polymérisable, ledit élément étant obtenu en déroulant un produit semi-fini en forme de bande à partir d'une bobine de stockage, puis en enroulant ledit produit sur un tambour de construction ;
- mouler le pneumatique cru dans une empreinte de moulage ménagée dans un moule de vulcanisation ;
- réticuler la matière élastomère en chauffant le pneumatique à une température donnée pendant un laps de temps donné ;
dans lequel ledit élément en matière élastomère réticulable contient au moins un polyalcénamère.

16. Procédé selon la revendication 15, dans lequel le produit est déroulé à une vitesse comprise entre 50 m/min et 400 m/min.

17. Procédé selon la revendication 165, dans lequel le produit est déroulé à une vitesse comprise entre 250 m/min et 350 m/min.

18. Procédé selon l'une quelconque des revendications 15 à 17, dans lequel le polyalcénamère est défini dans l'une quelconque des revendications 4 à 12.

19. Procédé selon l'une quelconque des revendications 15 à 18, dans lequel le mélange élastomère est défini dans la revendication 13 ou 14.

20. Pneumatique pour roues de véhicules, comprenant les éléments suivants :
- au moins un pli de carcasse caoutchoutée doté d'une configuration sensiblement toroïdale, dont les bords latéraux opposés sont associés à des fils respectifs gauches et droits de talon, chaque fil de talon étant enfermé dans un talon respectif ;
- une structure de ceinture comprenant au moins une bande de ceinture appliquée sur le pourtour dudit pli de carcasse caoutchoutée ;
- une bande de roulement appliquée sur le pourtour de ladite structure de ceinture ;
- une couche de renforcement placée entre ladite structure de bande et ladite bande de roulement ;
- des flancs droit et gauche appliqués à l'extérieur dudit pli de carcasse, lesdits flancs s'étendant, à un emplacement axialement extérieur, du talon respectif au bord respectif de la structure de ceinture ;
**caractérisé en ce que** ladite couche de renforcement placée entre ladite structure de ceinture et ladite bande de roulement comporte une pluralité de câblés de renforcement revêtus et soudés les uns aux autres par un mélange élastomère réticulé contenant au moins un polyalcénamère.

21. Pneumatique pour roues de véhicules selon la revendication 20, dans lequel les câblés de renforcement sont constitués par des fibres textiles.

22. Pneumatique pour roues de véhicules selon la revendication 20 ou 21, dans lequel le polyalcénamère est défini dans l'une quelconque des revendications 4 à 12.

23. Pneumatique pour roues de véhicules selon l'une quelconque des revendications 20 à 22, dans lequel le mélange élastomère est défini dans la revendication 13 ou 14.
